Europäisches Patentamt

European Patent Office

Office européen des brevets

(11) Publication number: **0 229 259**
A1

(12) **EUROPEAN PATENT APPLICATION**

(21) Application number: **86115876.4**

(22) Date of filing: **15.11.86**

(51) Int. Cl.³: **B 60 Q 3/04**
**G 09 G 1/28**

(30) Priority: **22.11.85 IT 2296185**

(43) Date of publication of application:
**22.07.87 Bulletin 87/30**

(84) Designated Contracting States:
**DE FR GB**

(71) Applicant: FIVRE S.p.A.
Via dei Sormani, 9
I-20100 Milano(IT)

(72) Inventor: Salvini, Ascanio
Via De Nicola 5
S. Martino Siccomario Pavia(IT)

(74) Representative: Di Iorio, Giuseppe, Dr.-Ing.
STUDIO DI IROIO Galleria Buenos Aires, 15
I-20124 Milano(IT)

(54) Electronic apparatus for displaying information, especially dashboard instrumentation for automobiles.

(57) The dashboard instrumentation of automobiles is of the type comprising a cathode ray tube for display on a screen, in different colours, of the sets of information that are useful for driving the vehicle and an electronic circuit which processes the signals coming from sensors of quantities and controls said tube. The invention consists in the use, as display for the information, of a tube equipped with a screen having coloured zones.

The screen may possess, in addition, a black-and-white zone or monochrome zone for the display of images originating from image detection equipment, such as television cameras for rear vision, for the control of the doors, video cassettes, television circuits etc.

Advantages: the number, form and distribution of the colour zones on the screen can be chosen practically to suit the wishes of the user.

Fig. 1

Croydon Printing Company Ltd.

The colour zone tube possesses a high degree of resolution and luminosity such as to permit the driver of the vehicle to perceive and distinguish from one another immediately the various types of information, the whole being to the advantage of driving safety. The tube, moreover, costs considerably less than and is mechanically stronger than colour tubes.

The invention is illustrated in Fig. 1.

## Description

This invention relates in general to an electronic display apparatus for information, and in particular to on-board instrumentation for automobiles, of the type comprising a cathode ray tube adapted for indicating on the screen, in various colours, the various sets of useful information and an electronic circuit adapted for processing signals coming from sensors of quantities that must be indicated and for controlling the aforementioned tube.

As is known, in the on-board instrumentation of automobiles, the cathode ray tube is normally composed of a monochrome tube, mounted on the dashboard, which displays on the screen, in correspondence with two or three horizontal bands of different colours, the various sets of information useful for driving the vehicle. The tube is controlled by an electronic circuit in relation to the electrical signals supplied to it from the sensors of quantities affecting the engine of the vehicle. Normally, each coloured band displays one type of information, for example continuous information of normal

/running

running, such as the speed of the vehicle, the rotational speed of the engine, the fuel level, the total distance travelled, or warning and alarm information, such as inadequate engine oil pressure, excessively high temperature of the cooling water, inadequacy of the brake circuit, and other information which may be useful to the driver, such as the average speed of the vehicle, the fuel consumption, the distance that must be travelled before arriving at the destination etc.

In order to obtain the aforementioned coloured bands, the screen of the picture tube is equipped, on its external face, with coloured transparent filters or films corresponding to the bands desired. Normally, three films, respectively of green, yellow and red colour, are applied onto the screen in order to obtain three coloured bands.

Although monochrome picture tubes with filters have been used in the instrumentation of vehicles because they are not expensive, they nevertheless possess many disadvantages in respect of the use and behaviour over a period of time of coloured transparent films.

In particular, due to the absorption caused by the thickness and colour of the film, the brightness of the information is considerably reduced. The quality of the information then deteriorates with time, in view of the fact that the film, generally of plastics material, becomes more opaque from the deposition of dust due to the accumulation of electrostatic charges. It is, furthermore, liable to deteriorate on account of scoring or abrasion.

/Moreover,

Moreover, the application of a film onto the external face of the tube reduces the angle of vision by introducing parallax errors.

A further disadvantage of these tubes lies in the reduced flexibility in the production of coloured areas. In practice, it is possible to obtain only limited bands of colour, each of these being reserved for a series of homogeneous information, which limits the possibility of assigning to a given item of information (quantity) its own colour different from that of the band to which it belongs. Nor would it be possible, on the other hand, to apply onto the screen a plurality of pieces of film of different colours in order to increase the number of coloured areas because, in such a case, the joint lines between the various adjacent or surrounding parts would cause serious interference with vision.

It is known, moreover, for the purpose of overcoming the aforementioned disadvantages, that colour TV picture tubes may be used. With such tubes, indeed, there are no limits to the possibility of obtaining any desired number of coloured areas and parallax errors are not introduced. However, the cost of such tubes is very high, about three times that of a monochrome tube and, therefore, they have not been utilised in the dashboard instrumentation of automobiles. Indeed, their high cost is incompatible with the demands of economy required in the automobile manufacturing field in general, and for commercial vehicles in particular.

/The high

The high cost is due both to the type of electronic circuits, which are relatively complex, which they demand, and to the presence of a colour picture tube which uses three guns, a mask for guiding the beams of different colours, etc.

In addition to the high cost, colour tubes have a delicate mechanical structure, which is not very resistant to impacts and vibrations so that, when mounted on vehicles, they are subject to fracture and displacement of the mask, with the result that vision may be adversely affected or the purity of the colour may be altered.

It is the objective of the present invention to provide, in general, an electronic apparatus for the display of information and, in particular, dashboard instrumentation for automobiles of the type described above, which utilises a display adapted for overcoming the disadvantages of the standard monochrome tubes or colour cathode ray tubes and, finally, enables a large number of colour zones to be reproduced without limit in regard to form and distribution on the screen, which shall be free of parallax errors and shall possess a high level of definition and luminosity, appreciable mechanical strength against impact and vibration and, finally, which shall be inexpensive.

In order to achieve the aforementioned objectives, the display apparatus according to this invention is characterized by the fact that it uses, as the display, a cathode ray tube having coloured zones.

/The tube

The tube concerned has a structure substantially analogous to that of black-and-white tubes or monochrome tubes, but equipped with a screen, on the internal surface of which there are deposited the various colours of the phosphorescent materials, which are excited by a single gun.    The tube differs from the colour picture tube because it can reproduce coloured zones and not images in colour and, therefore, it does not demand either a mask nor other devices for controlling the position of the beam on the screen, thereby achieving a high degree of resolution and luminosity; the high resolution permits the reproduction of signs and graphics, such as Chinese, Japanese, or Arabic characters etc., and the absence of a mask etc. permits the obtaining of a mechanically robust structure.

The colour zone tube differs from the monochrome tube provided with transparent coloured films, in that it is capable of reproducing a plurality of coloured zones, without limitation of form.    Its brightness is greater in that it is not subject to the absorption caused by the thickness and colour of the films and, moreover, the quality of vision is better because parallax errors are not introduced.

According to another aspect of the invention, the colour zone tube is equipped with a screen possessing, in addition to the colour zones, at least one black-and-white zone or monochrome zone, reserved for the display of images arising from images detector equipment for appropriately displaced.    In this case, the electronic circuit will comprise also circuits for the processing of image signals and the selection

/of the

of the visual programme can be carried out by the user by means of a control keyboard for a switching circuit.

The electronic circuit may comprise also, in conformity with this invention, an electronic computer intended for calculating, upon demand of the user, further data such as, in the case of vehicles, the average speed, the fuel consumption and the distance to be travelled before arriving at the destination.

The plurality of the coloured zones provided by the colour zone picture tube will permit, in the aforementioned application, in addition to a display of all the standard information, warning and alarm information affecting the driving of the automobile, also a display of the information prepared by the aforesaid computer. The computer will, in this case, utilise the tube screen as a video unit.

Further characteristics and advantages of the invention will become apparent from the following description and the attached drawings, which relate to a preferred but not restrictive form of embodiment of the display apparatus applied to an automobile. In the drawings:

- Fig. 1 shows, in front view, an automobile dashboard equipped with an instrumentation system according to this invention;
- Fig. 2 a block diagram of the instrumentation system of Fig. 1; and
- Fig. 3 a front view, to a larger scale, of a screen of the display unit of the instrumentation according to this invention.

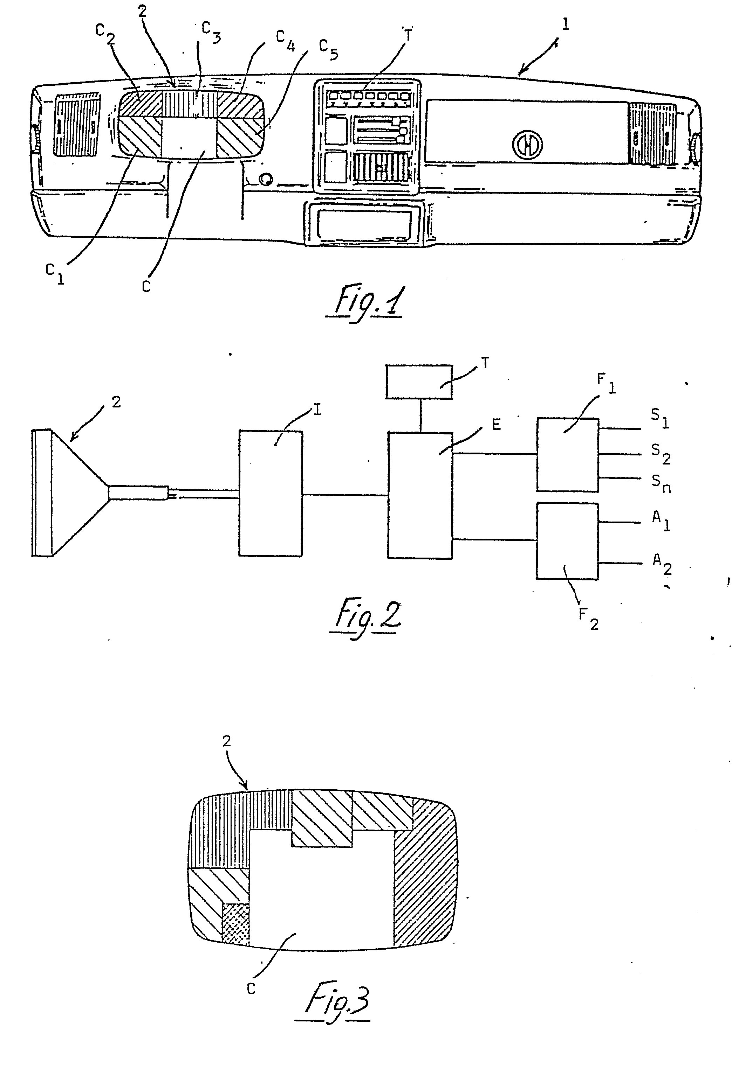

In Fig. 1,

In Fig. 1, reference 1 denotes the dashboard of an automobile, 2 denotes the incorporated display unit, and T a control keyboard for the electronic circuit of the instrumentation system.

The display unit 2 consists of a picture tube equipped with a screen which, by way of example, possesses five coloured zones $C_1$, $C_2$, $C_3$, $C_4$ and $C_5$ and one black-and-white or monochrome zone C. The five zones $C_1$, $C_2$, ... $C_5$ are of different colours and each is intended for displaying a set of information useful to the driver, for example, continuous information of normal running of the vehicle such as the speed of the vehicle itself, the rotational speed of the engine, the distances travelled etc., or emergency information such as inadequate engine oil pressure, inadequacy of the brake circuit etc., or again warning information such as the energising of the full-beam headlights etc. In addition to the normal colours green, yellow and red, blue and other colours of distinctive shades may also be used.

The last zone C is intended for displaying, either continuously or on command, images and/or programmes that may be of interest to the driver.

For this purpose, the electronic control circuit of the picture tube comprises, as indicated schematically in Fig. 2, the input circuits $F_1$ and $F_2$, a processing circuit E controlled by the keyboard T and a circuit I for addressing signals to the picture tube and for supplying the tube.

/The circuit

The circuit $F_1$ is an interface between the external signals coming from sensors $S_1$, $S_2$, $S_n$ of quantities that are of importance and the processing circuit E.   Said sensors, of course, are arranged in a suitable position near the engine and other equipment of the vehicle, depending upon the quantity to be detected and displayed.

The circuit $F_2$ is an interface between the image signals originating from the image detection equipments $A_1$, $A_2$ etc. and the processing circuit E.   Said equipments may be composed of television cameras, which fulfill the functions of rear-view mirrors or pick-up mirrors of the doors of the automobile or of video recorders capable of transmitting recorded data and images relating to the route of the automobile, such as road maps, lists and addresses of firms or, finally, television circuits capable of transmitting programmes and information received via antenna.

In the case of display of images, of course, the electronic circuit E is equipped with circuits capable of processing signals and images, and is also provided with a switching circuit, controlled from the keyboard T, for the selection of the programme desired and capable, in addition, of activating the television circuit only when the vehicle is stopped.

In the variant of Fig. 3, the screen of the picture tube possesses six coloured zones, different in form from those of the picture tube of Fig. 1.   A black-and-white or monochrome zone C is again provided for the reproduction of the images.

/In general,

In general, the number, colours and arrangement of the zones on the screen may be selected by the user and the presentations of the information are controlled by a logic circuit of a system which is preset, from time to time, according to the practical requirements.

In the drawings, reference is made to the use of the apparatus in the field of automobile construction.   It is, nevertheless, self-evident that the equipment may find uses in many other fields, for example in aviation, medicine, airport operations, railways etc.

While the principle of the invention remains unchanged, the details of construction and the forms of embodiment may vary widely from that which has been described and illustrated by way of example, without thereby departing from the scope of the invention.

/CLAIMS

## CLAIMS

1. Electronic apparatus for display of information, especially dashboard instrumentation for automobiles, of the type comprising a cathode ray tube adapted for displaying on the screen, in different colours, the various sets of information and an electronic circuit capable of processing the signals originating from sensors of the quantities to be signalled and of controlling said cathode ray tube, characterized by the fact that the cathode ray tube is equipped with a screen having coloured zones.

2. Electronic apparatus according to Claim 1, characterized by the fact that the screen possesses at least one other zone, in black-and-white or in monochrome, for the display of images originating from image detection devices and the electronic circuit comprises, in addition, circuits for processing signals originating from said devices.

3. Dashboard instrumentation system for automobiles according to Claim 2, characterized by the fact that the image detection equipment is constituted of one or more television cameras adapted for fulfilling the functions of the rear-view mirror.

4. Dashboard instrumentation system for automobiles according to Claim 2, characterized by the fact that the image detection equipment comprises a video-recorder (video cassette) capable

/of transmitting

of transmitting recorded data and images relating to the route of the automobile, such as road maps, lists and addresses of firms.

5. Dashboard instrumentation system for automobiles according to Claim 2, characterized by the fact that the image detection equipment comprises a television circuit capable of transmitting programmes and information received via antenna.

6. Dashboard instrumentation system for automobiles according to Claim 2, characterized by the fact that the image detection equipment comprises a plurality of devices as in Claims 3, 4 and 5.

7. Dashboard instrumentation system for automobiles according to the preceding Claims, characterized by the fact that the electronic circuit comprises a computer for data and images which utilises the screen of the tube as a video unit.

8. Dashboard instrumentation system for automobiles according to Claim 7, characterized by the fact that it comprises a switching circuit (device), which permits the driver to select the display of the data or images desired.

9. Dashboard instrumentation system for automobiles according to Claim 8, characterized by the fact that the switching circuit permits the activation of the television circuit only when the vehicle is stopped.

For FIVRE S.p.A.

The Agent

Fig.1

Fig.2

Fig.3

**European Patent Office**

**EUROPEAN SEARCH REPORT**

Application number

EP 86 11 5876

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 487 120 (THOMSON-CSF) * Figures 1,2; page 2, line 24 - page 5, line 18 * | 1 | B 60 Q 3/04 G 09 G 1/28 |
| Y | FR-A-2 270 653 (BALL BROTHERS RESEARCH CORP.) * Figures 1,2; page 3, line 16 - page 4, line 36 * | 1,2 | |
| Y | ELECTRONICS, vol. 47, no. 11, 30th May 1974, pages 31,32, New York, US: "CRTs for data add cheap color display" * Pages 31,32 * | 1,2 | |
| Y | LASER FOCUS, vol. 20, no. 6, June 1984, pages 52,56,57, Newton, Massachusetts, US; B. DANCE: "British firm develops CRT for vehicle dashboard display" * Pages 52,56,57 * | 1,8 | TECHNICAL FIELDS SEARCHED (Int. Cl.4) B 60 Q 3/04 G 09 G 1/28 G 06 F 3/153 G 09 G 1/16 |
| A | EP-A-0 091 268 (McMICHAEL LTD.) * Figure 4; page 6, line 35 - page 9, line 2 * | 4,7 | |

The present search report has been drawn up for all claims

| Place of search | Date of completion of the search | Examiner |
|---|---|---|
| THE HAGUE | 23-04-1987 | VAN ROOST L.L.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82